# EUROPÄISCHE PATENTSCHRIFT

(11) **EP 2 724 806 B1**
(45) Veröffentlichungstag und Bekanntmachung des Hinweises auf die Patenterteilung: **15.07.2020**
(21) Anmeldenummer: 13001419.4
(22) Anmeldetag: 19.03.2013
(51) Int. Cl.: B23K 9/235, F23D 99/00, F23D 14/38, F23D 23/00

(54) **Mehrflammenbrenner und Verfahren zum Erwärmen eines Werkstücks**
Multi-flame burner and method for heating a workpiece
Brûleur multiflamme et procédé de chauffage d'une pièce usinée

(30) Priorität: 23.10.2012 DE 102012020801
(43) Veröffentlichungstag der Anmeldung: 30.04.2014
(73) Patentinhaber: Linde GmbH, 82049 Pullach (DE)
(72) Erfinder: Stocker, Johann, 82205 Gilching (DE)
(74) Vertreter: Lu, Jing

(56) Entgegenhaltungen:
- DE-A1- 2 360 607
- DE-A1- 4 429 069
- DE-C1- 19 619 171
- JP-A- H1 182 944
- US-A- 1 952 356
- US-A- 5 979 741

## Beschreibung

Die Erfindung betrifft einen Mehrflammenbrenner mit Brennerköpfen und dazugehörigen Anschlussrohren, die dafür eingerichtet sind, bei Speisung mit einem Brennstoff wenigstens eine jeweils entlang einer Flammenachse ausgerichtete Brennerflamme zu erzeugen, sowie ein Verfahren zum Vorwärmen eines Werkstücks, insbesondere eines Rohrs oder Großrohrs mit einem entsprechenden Mehrflammenbrenner.

### Stand der Technik

In unterschiedlichsten Materialbearbeitungs- und Fertigungsverfahren ist ein Vorwärmen von Werkstücken erforderlich. Die vorliegende Anmeldung nimmt dabei vor allem auf das Vorwärmen beim Schweißen Bezug. Grundsätzlich kann die Erfindung jedoch auch in anderen Verfahren zum Einsatz kommen, bei denen eine Wärmeeinbringung mittels Flammen gewünscht ist.

In bekannten Schweißverfahren erfolgt das Vorwärmen der zu schweißenden Werkstücke aus unterschiedlichen Gründen. Die Hauptgefahr bei mangelnder Vorwärmung liegt in der sogenannten Wasserstoffversprödung in der Wärmeeinflusszone. Auch neigen umwandlungsfähige Stähle bei erhöhten Abkühlgeschwindigkeiten, wie sie ohne Vorwärmen auftreten, dort zur Aufhärtung. Hieraus ergibt sich eine erhöhte Kaltrissneigung im Fügebereich des Werkstücks. Diese Nachteile nehmen zum Beispiel beim Schweißen von Rohren mit zunehmendem Rohrdurchmesser ebenfalls zu. Daher liegt ein bevorzugter Einsatzbereich der vorliegenden Erfindung in der Vorbereitung von Großrohren durch Vorwärmen auf ein nachfolgendes Schweißverfahren.

Die erreichbare Härte und damit die Gefahr von Kaltrissen ist dabei im Wesentlichen von der Dicke des zu bearbeitetenden Werkstücks, von der zwei- oder dreidimensionalen Wärmeableitung, von vorhandenen Legierungselementen und deren Gehalten, von der jeweiligen Wärmeeinbringung des Schweißverfahrens und/oder von der Bauteiltemperatur abhängig. Letztere kann durch das Vorwärmen beeinflusst werden. Das Vorwärmen verringert die Abkühlgeschwindigkeit des Nahtbereichs und verbessert die Wasserstoffeffusion. Außerdem wirkt es sich günstig auf den Schweißeigenspannungszustand der Schweißverbindung aus.

Die erforderliche Vorwärmtemperatur kann jeweils ermittelt und abhängig hiervon die einzubringende Wärme und/oder der Einsatz der jeweiligen Vorwärmeinrichtung bestimmt werden. Insbesondere die Grundzähigkeit des Werkstoffs, dessen Wanddicke, die Nahtform, die eingesetzte Schweißtechnik und die Schweißgeschwindigkeit sind bei der Bestimmung der Vorwärmtemperatur zu berücksichtigen.

Grundsätzlich ist ein Vorwärmen bei Verarbeitungstemperaturen von unter 5 °C und bei Überschreitung bestimmter Grenzdicken (vor allem bei hochfesten Stählen) erforderlich. Die Vorwärmtemperatur beträgt beispielsweise 80 bis 200 °C.

Zum Vorwärmen von Werkstücken vor dem Schweißen werden in der Regel vorzugsweise mehrflammige Brenner verwendet, welche aus den unten näher erläuterten Gründen z.B. mit Acetylen und Sauerstoff enthaltenden Brennstoffgemischen bzw. Acetylen und Druckluft enthaltenden Brennstoffgemischen betrieben werden. Das Vorwärmen geschieht zur Vorbereitung eines schweißnahtnahen Bereichs auf dem Werkstück (z.B. Rohr oder Großrohr) für das nachfolgende Anbringen einer Schweißnaht in diesem vorgewärmten und daher zu Beginn des Schweißvorgangs bereits warmen Bereich (warm bedeutet hier zumindest wärmer als die Umgebungsluft).

Insbesondere beim Vorwärmen von Großrohren ist eine konzentrierte Wärmeeinbringung im schweißnahtnahen Bereich erforderlich, ohne die Werkstückoberfläche anzuschmelzen und ohne Feuchtigkeitsrückstände vom Abgas der Flamme zu hinterlassen. Die bei konzentrierter Wärmeeinbringung entstehende große Menge heißer Abgase belastet jedoch je nach Brenneranordnung den Brenner selbst. Hierdurch werden die verwendeten Brennköpfe gegebenenfalls thermisch geschädigt. Dies trifft insbesondere bei unsachgemäßer Bedienung und Justage zu. Entsprechende Sicherheitsmaßnahmen sind aufwendig.

In diesem Zusammenhang werden Rohre mit einem Durchmesser im Bereich von 1 bis 12 Metern als Großrohre bezeichnet.

Aus der DE 23 60 607 A1 ist eine Gasbrennervorrichtung bekannt, welche einen Rahmen mit mehreren daran angeordneten Gliederarmen aufweist, wobei ein Gasbrenner am freien Ende jedes Gliederarms vorgesehen ist.

Aus der JP H11 82944 A ist ein Brenner bekannt, welcher mehrere Brennerköpfe aufweist, welche jeweils an gekröpften Anschlussrohren angeordnet sind.

Es besteht daher der Bedarf nach verbesserten Möglichkeiten zum Erwärmen von Werkstücken, insbesondere von Rohren oder Großrohren, die diese Nachteile nicht aufweisen und sicher bedienbar sind.

### Offenbarung der Erfindung

Die Erfindung schlägt vor diesem Hintergrund einen Mehrflammenbrenner gemäß Anspruch 1 sowie ein Verfahren gemäß Anspruch 8 vor.

Die Erfindung ist hauptsächlich hinsichtlich der Vorwärmung von Rohren oder Großrohren beschrieben, jedoch ist sie nicht auf diese beschränkt, da gefunden wurde, dass sich auch allgemein im Großbehälterbau die vorliegende Erfindung zur Vorwärmung von einzelnen Bauteilen oder Bauteilgruppen mit besonderem Vorteil einsetzen lässt.

Der Mehrflammenbrenner ist so ausgestaltet, dass alle Anschlussrohre gekröpft ausgebildet sind.

Besonders bevorzugt ist der Mehrflammenbrenner so ausgestaltet, dass die gekröpften Anschlussrohre einen Kröpfungswinkel im Bereich von 30° bis 60°, bevorzugt von ca. 45°, aufweisen.

Mit besonderem Vorteil ist der Mehrflammenbrenner dadurch gekennzeichnet, dass die Anschlussrohre mittels einer Verschraubung drehbar mit jeweils einem Anschlussstutzen verbunden sind, wobei die Anschlussstutzen an ihrem jeweils anderen Ende an einer gemeinsamen Speiseleitung befestigt und durch die gemeinsame Speiseleitung mit dem Brennstoff speisbar sind.

Gemäß der Erfindung sind die Brennerköpfe in wenigstens zwei Gruppen (A und B) von Brennerköpfen vorgesehen sind, wobei die Brennerköpfe wenigstens einer ersten Gruppe (A) jeweils alternierend zu den Brennerköpfen wenigstens einer weiteren Gruppe (B) angeordnet und die Flammenachsen der Brennerköpfe zumindest der ersten Gruppe schräg zu den Flammenachsen der Brennerköpfe zumindest der wenigstens einen weiteren Gruppe ausgerichtet sind.

Zweckmäßigerweise sind die Brennerköpfe innerhalb jeder Gruppe jeweils gleichsinnig oder parallel zueinander angeordnet.

Die Brennerköpfe werden in wenigstens zwei Gruppen bereitgestellt, wobei die Brennerköpfe der wenigstens zwei Gruppen jeweils alternierend angeordnet und die Flammenachsen der Brennerköpfe in wenigstens einer oder jeder Gruppe jeweils abweichend zu den Flammenachsen wenigstens einer oder jeder anderen Gruppe ausgerichtet sind. Beispielsweise können die Flammenachsen innerhalb jeder Gruppe parallel angeordnet sein. Dies erlaubt eine besonders einfache Serienfertigung.

Gemäß einer vorteilhaften Weiterbildung der Erfindung weisen die Brennerköpfe jeweils Flammenachsen auf, die gegenüber einer Senkrechten auf eine Mittellinie der Speiseleitung in axialer und/oder in radialer Richtung geneigt sind, bevorzugt jeweils nebeneinander angeordneten Brennerköpfe mit einem Winkel von 5° bis 45° zueinander geneigt sind.

Ein entsprechender Mehrflammenbrenner ist vorzugsweise so ausgebildet, dass die Flammenachsen der nebeneinander angeordneten Brennerköpfe jeweils windschief zueinander angeordnet sind. Sie können beispielsweise in einem Winkel von 5 bis 45° axial oder radial zur Senkrechten auf die Mittelachse geneigt sein. Die jeweils gewählten Winkel richten sich unter anderem auch nach den Anforderungen des jeweiligen Erwärmungsprozesses. Insbesondere bei erforderlicher großer lokaler Erwärmung ist eine engere Winkelstellung erforderlich. Sollen die gebildeten Abgase besonders effektiv abgeführt werden, sind größere Winkel möglich.

Zweckmäßigerweise weist der Mehrflammenbrenner eine Gasversorgungseinrichtung auf, die dafür eingerichtet ist, den Mehrflammenbrenner mit wenigstens einem gasförmigen Brennstoff zu speisen, wobei die Gasversorgungseinrichtung bevorzugt dafür eingerichtet ist, den Mehrflammenbrenner mit einem Acetylen enthaltenden Brennstoffgemisch, besonders bevorzugt einem Acetylen-(Druck)luft-Gemisch oder einem Acetylen-Sauerstoff-Gemisch, als dem wenigstens einen gasförmigen Brennstoff zu speisen.

Vorteilhafterweise ist wenigstens eine Gasversorgungseinrichtung vorgesehen, die dafür eingerichtet ist, den Mehrflammenbrenner mit wenigstens einem gasförmigen Brennstoff zu speisen. Diese ist vorzugsweise regelbar ausgebildet, so dass die jeweils eingebrachte Wärmeleistung geregelt werden kann und/oder durch die Bereitstellung jeweils angepasster Gasgemische eine besonders vorteilhafte Adaption an den zu schweißenden Werkstoff sichergestellt ist.

Ein erfindungsgemäßer Mehrflammenbrenner weist gemäß einer weiteren vorteilhaften Ausgestaltung zumindest 4, 6 oder 8 Brennerköpfe auf. Bevorzugt sind die Brennerköpfe in einem Abstand von 5 bis 15 cm zueinander angeordnet. Entsprechende Abstände richten sich nach der Homogenität der zu erzielenden Erwärmung und/oder der zulässigen Temperatur der Brennerköpfe.

Gemäß einer weiteren bevorzugten Ausgestaltung weisen die Brennerköpfe Brennerdüsen auf, wobei die Brennerdüsen der jeweils benachbarten Brennerköpfe um 1 bis 10 cm versetzt zu einer gemeinsamen Mittellinie zwischen den Brennerdüsen angeordnet sind. Wie auch unten im Zusammenhang mit den Figuren näher erläutert, liegen hierbei die Ursprünge der jeweiligen Flammen in definierten Abständen zueinander, so dass sich die wechselseitige Beeinflussung der Brennerköpfe weiter reduziert.

Es wurde gefunden, dass für viele Anwendungen eine besonders vorteilhafte Länge der Gesamtheit aus Brennerkopf und Anschlussrohr im Bereich von 8 bis 25 cm liegt.

Eine vorteilhafte Weiterbildung der vorliegenden Erfindung sieht vor, dass der Mehrflammenbrenner eine Speiseleitung aufweist, die als gebogener Schaft ausgeführt ist, wobei der gebogene Schaft bevorzugt im Wesentlichen aus Edelstahl gefertigt ist.

Die Speiseleitung, die auch als Schaft oder nochmals anders ausgedrückt auch als Rohrleitung bezeichnet werden kann, ist zweckmäßigerweise zur Zufuhr des Brennstoffs aus einem metallischen Werkstoff gefertigt. Durch eine gebogene Ausführung erhält sie eine für die vorliegende Erfindung sehr vorteilhafte Anpassbarkeit an die Form des vorzuwärmenden Werkstücks, also z.B. an die Rundung eines vorzuwärmenden Großrohrs. Fertigungstechnisch eignet sich für eine solche gebogene Ausführung besonders Edelstahl als metallischer Werkstoff.

Erfindungsgemäß sind in einem entsprechenden Mehrflammenbrenner, wie erwähnt, die Brennerköpfe mit den schräg zueinander ausgerichteten Flammenachsen jeweils alternierend an einer gemeinsamen Speiseleitung befestigt und durch diese speisbar. Die Speiseleitung dient dabei gleichzeitig als Brennstoffverteiler und Befestigungseinrichtung für die Brennerköpfe. Eine entsprechende Speiseleitung kann beispielsweise gekrümmt sein und hierdurch an die Form eines zu erwärmenden Werkstücks angepasst sein. Bei der Herstellung eines erfindungsgemäßen Mehrflammenbrenners wird die Speiseleitung vorteilhaft so verformt, dass sie der entsprechenden der Form des Werkstücks im Wesentlichen nachgebildet ist. Das heißt, dass zum Beispiel ein Kreissegment zweckmäßig ist, das denselben Mittelpunkt wie ein vorzuwärmendes (Groß)rohr und einen entsprechend dem größeren Radius (Radius Rohr zzgl. radialem Abstand zwischen Rohr und Speiseleitung) angepasste Biegung aufweist. Darüber hinaus können auch andere Formgebungen vorteilhaft und im Sinne der Erfindung sein.

Die Anpassbarkeit des Mehrflammenbrenners an die Form des vorzuwärmenden Werkstücks, insbesondere an den Durchmesser der vorzuwärmenden Rohre, ist ein wesentlicher Vorteil der vorliegenden Erfindung gegenüber dem Stand der Technik.

Verfahrensseitig wird die gestellte Aufgabe durch ein Verfahren zum Vorwärmen eines Werkstücks, insbesondere eines Rohrs oder Großrohrs, bei dem ein Mehrflammenbrenner verwendet wird und mittels des Mehrflammenbrenners erzeugte Brennerflammen auf das Werkstück gerichtet werden. Das erfindungsgemäße Verfahren profitiert von den zuvor und nachstehend erläuterten Vorteilen, auf die daher ausdrücklich verwiesen werden kann.

### Weitere Vorteile der Erfindung

Die Brennerköpfe werden erfindungsgemäß abwechselnd zueinander verschränkt, so dass die jeweils gebildeten Flammen voneinander weg weisen. Durch die Flammen gebildete heiße Abgase können die Brennerköpfe daher nicht wechselseitig schädigen.

Üblicherweise sind entsprechende Brennerköpfe an einer gemeinsamen Speiseleitung in Form einer Rohrleitung angebracht. Diese kann gerade oder beliebig gekrümmt sein und weist eine Mittelachse auf, die je nach Ausbildung der Speiseleitung ebenfalls gerade oder gekrümmt ist. Vorteilhafterweise ist die Ausrichtung der Flammenachsen dabei derart, dass diese jeweils gegenüber einer Senkrechten auf die Mittelachse am Ort der Anbringung in axialer (also in Längsrichtung zur Speiseleitung) und/oder in radialer Richtung (also quer zu dieser) geneigt sind. Die Neigung nebeneinander angeordneter Brennerköpfe ist dabei vorzugsweise zumindest in einer dieser Richtungen gegensinnig. Dies kann bedeuten, dass die Brennerköpfe abwechselnd mit und entgegen dem Uhrzeigersinn gegenüber der Achse der Speiseleitung radial schräggestellt sind.

Ein wesentlicher Aspekt der vorliegenden Erfindung ist damit eine gegenüber dem Stand der Technik abweichende Anordnung bzw. Ausrichtung der Brennerköpfe und damit der Flammen- und Abgasrichtung. Das Abgas wird durch Schrägstellung der Brenner so gelenkt, dass deren Hauptflammen funktionsgerecht auf einen schweißnahtnahen Bereich treffen, aber der Abgasstrom nicht den bzw. die benachbart positionierten Brenner aufheizt. Hierzu sind, wie nachfolgend erläutert, vorzugsweise definierte Winkelstellungen der Brenner zueinander möglich und einzuhalten. Diese ergeben sich vorteilhaft aus der Kröpfung der Anschlussrohre und ggf. aus der Ausrichtung der Anschlussrohre an der drehbaren Verschraubung.

Die Erfindung ermöglicht damit die Einbringung einer maximalen Wärmeleistung auf kleinem Raum, insbesondere auf ein sich seinerseits drehendes Großrohr. Trotz konzentrierterer Wärmeeinbringung als in Einrichtungen gemäß dem Stand der Technik minimiert sich die Gefahr der Brennererhitzung auch bei Fehlbedienung. Hierdurch ergeben sich geringere Ausfallzeiten und geringerer Reparaturbedarf, was entsprechende Verfahren wirtschaftlich vorteilhaft macht. Bezogen auf die einzubringende Wärmeleistung ergibt sich aufgrund der erfindungsgemäß vorgeschlagenen Maßnahmen ein signifikant verringertes Brennergewicht.

Die insgesamt erzielbaren geringeren Brennerkosten und die effektivere Nutzung eines entsprechenden Brenners führen zu wirtschaftlichen Vorteilen gegenüber bekannten Einrichtungen, insbesondere beim Großbehälterbau.

Vorteilhafterweise ist, wie bereits erläutert, ein entsprechender Mehrflammenbrenner mit einem Acetylengemisch, insbesondere einem Actylen/Sauerstoff-Gemisch speisbar, so dass sich die Vorteile bekannter Acetylenverfahren auch mit dem erfindungsgemäßen Brenner nutzen lassen. Wie bekannt, ergibt die besonders heiße, konzentrierte Acetylen/Sauerstoff-Flamme an der Werkstückoberfläche einen raschen Temperaturanstieg und bewirkt einen Wärmestau innerhalb des Werkstücks mit großem Temperaturgradienten, so dass lokal eine große Wärmemenge eingebracht werden kann. Es können jedoch auch beispielsweise Acetylen/Druckluft-Flammen und/oder Acetylen/Saugluft-Brenner zum Einsatz kommen. Acetylen/Druckluft-Flammen arbeiten weich und schonend, jedoch dennoch intensiv und wirtschaftlich. Sie sind über den gesamten Bereich der möglichen Acetylen/Luft-Gemischbildung sehr gut regelbar und weitgehend rückzündsicher. Hierdurch ergeben sich Vorteile beim Arbeitsschutz. Aufgrund der erzielbaren geringeren Oberflächentemperatur wird jedoch eine gute Durchwärmung des Werkstücks erreicht. Noch geringere Temperaturengradienten lassen sich bei den genannten Saugluftbrennern erzielen, die nach dem Bunsen-Prinzip arbeiten.

Vorteilhafterweise weisen die erläuterten Mehrflammenbrenner insgesamt zumindest 4, 6 oder 8 Brennerköpfe auf. Gegenüber bisher bekannten Dreifachkopf-Vorwärmbrennern ergeben sich damit Vorteile, weil zu jedem Zeitpunkt ein größerer Bereich eines Werkstücks erhitzt werden kann. Aufgrund der erfindungsgemäßen Anordnung können z.B. acht oder mehr Brennerköpfe an einem Verteilerrohr, nämlich der bereits erwähnten Speiseleitung, angebracht werden, ohne dass sich diese selbst oder gegenseitig unzulässig erhitzen würden. Damit ist, wie erwähnt, eine größere Wärmeleistung auf kleinem Raum insbesondere auf ein sich drehendes Großrohr einbringbar. Die Anzahl der verwendbaren Brennerköpfe ist nicht auf vier oder acht beschränkt, vielmehr können auch Brenner mit beispielsweise zehn, 12, 14, 16, 18 oder 20 Brennern oder mit einer größeren Anzahl von Brennern hergestellt werden.

Besonders vorteilhaft ist, wenn die jeweils nebeneinander angeordneten Brennerköpfe jeweils divergierende Flammenachsen aufweisen und damit divergierende Brennerflammen erzeugen. Hierdurch weisen, wie erwähnt, die Abgasströme entsprechender Brennerflammen voneinander weg und es erfolgt keine wechselseitige Überhitzung.

Die Erfindung wird unter Bezugnahme auf die beigefügten Zeichnungen näher erläutert, welche eine bevorzugte Ausführungsform der Erfindung zeigen.

### Kurze Beschreibung der Zeichnungen

Figur 1 zeigt einen Brennerkopf, der für einen Mehrflammenbrenner gemäß einer Ausführungsform der Erfindung verwendet werden kann.
Figur 2 zeigt einen Mehrflammenbrenner gemäß einer Ausführungsform der Erfindung in schematischer Darstellung in Seitenansicht.
Figur 3 zeigt einen Mehrflammenbrenner gemäß einer Ausführungsform der Erfindung in schematischer Darstellung in Längsansicht.

In den Figuren tragen einander entsprechende Elemente identische Bezugszeichen. Auf eine wiederholte Erläuterung wird der Übersichtlichkeit halber verzichtet.

### Ausführungsformen der Erfindung

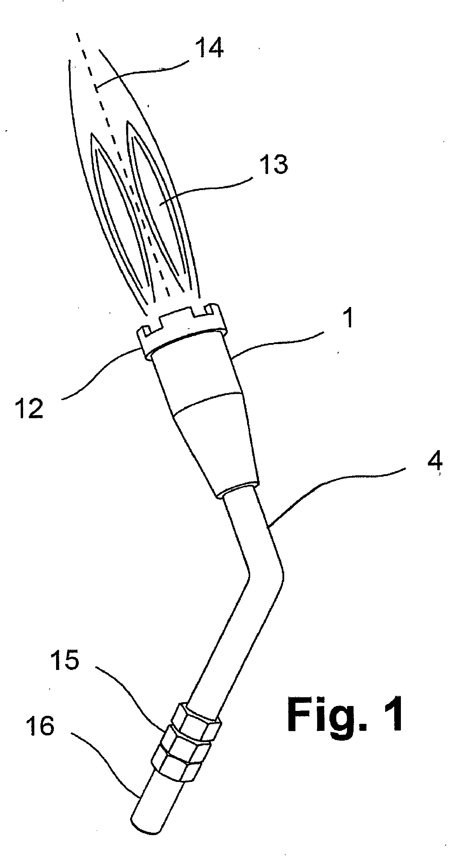

Die Figur 1 zeigt in schematischer Darstellung einen Brennerkopf 1, der einen Düsenkranz 12 aufweist, welcher eine beliebige Anzahl vorzugsweise konzentrisch angeordneter Düsen aufweisen kann, durch welche Brennstoff ausströmen kann. Beim Entzünden des Brennstoffs wird eine Brennerflamme 13 gebildet, die entlang einer Flammenachse 14 verläuft. Der Brennerkopf 1 kann über ein gekröpftes Anschlussrohr 4 und eine Verschraubung 15 und einen Anschlussstutzen 16 an einer Speiseleitung befestigt werden. Beispielsweise ist der Anschlussstutzen 16 an die Speiseleitung angeschweißt.

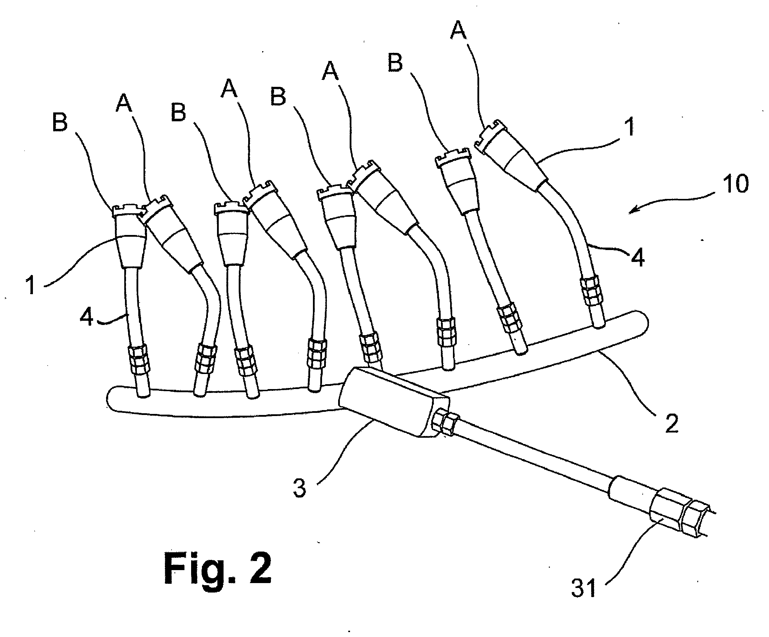

In Figur 2 ist ein Mehrflammenbrenner gemäß einer besonders bevorzugten Ausführungsform der Erfindung in Seitenansicht schematisch dargestellt und insgesamt mit 10 bezeichnet. Der Mehrflammenbrenner 10 umfasst insgesamt acht Brennerköpfe 1 mit jeweils zugehörigen gekröpften Anschlussrohren 4, von denen nicht alle mit Bezugszeichen versehen sind. Die Brennerköpfe 1 sind hier in Gruppen von Brennerköpfen A und B zusammengefasst. Eine erste Gruppe von Brennerköpfen A ist dabei so angeordnet, dass durch die jeweiligen Düseneinheiten bzw. die dort vorgesehenen Düsen Brennerflammen mit Flammenachsen ausgebildet werden können, die im Wesentlichen gleichsinnig angeordnet sind. Gleiches gilt für die Brennerköpfe der Gruppe B. Die Flammenachsen 14 der Gruppe A und die Flammenachsen 14 der Gruppe B sind jedoch aufgrund der Schrägstellung der Brennerköpfe 1 schräg bzw. windschief zueinander ausgerichtet, so dass jeweils gebildete Abgase und/oder die erzeugte Abwärme nicht benachbarte Brennerköpfe 1 schädigen kann.

Mittels der zuvor erläuterten Verschraubungen 15 und den Anschlussstutzen 16 sind die Brennerköpfe 1 an einer Speiseleitung 2 angebracht, die beispielsweise gekrümmt und damit an die Form eines zu bearbeitenden Werkstücks angepasst sein kann. Die Speiseleitung kann mit einer Versorgungsleitung 3 gekoppelt sein, die weitere Einrichtungen, beispielsweise Manometer und Regler, aufweisen kann. Insbesondere kann eine derartige Versorgungsleitung eine Mischeinheit 31 aufweisen, mittels der ein Acetylen/Sauerstoff-Gemisch und/oder ein Acetylen/Luft-Gemisch erzeugt werden kann.

Gemäß einer anderen, vereinfachten Ausgestaltung der Erfindung kann es für bestimmte, weniger anspruchsvolle Anwendungen auch vorteilhaft sein, auf die Verschraubung 15 und damit auf die Drehbarkeit der gekröpften Anschlussrohre 4 zu verzichten. In diesem Fall kann der Anschlussstutzen 16 verlängert und gekröpft ausgeführt werden, sodass sich Anschlussstutzen 16 und Anschlussrohr 4 zu einem Bauteil vereinigen.

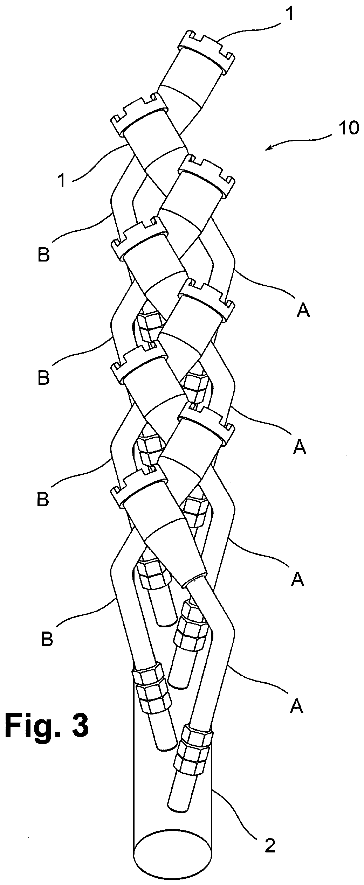

In Figur 3 ist ein Mehrflammenbrenner gemäß einer besonders bevorzugten Ausführungsform der Erfindung, ebenfalls mit 10 bezeichnet, in Längsansicht dargestellt. Wie ersichtlich, sind die jeweiligen Brennerköpfe 1 zueinander verschränkt angeordnet, so dass die sich ausbildenden Flammen 13 voneinander weg weisen. Die Speiseleitung 2 kann gekrümmt oder gerade ausgebildet sein.

### Bezugszeichenliste

- 1: Brennerkopf

- A, B: Gruppe

- 10: Mehrflammenbrenner
- 12: Düsenkranz
- 13: Brennerflamme
- 14: Flammenachse
- 15: Verschraubung
- 16: Anschlussstutzen

- 2: Speiseleitung, Schaft

- 3: Versorgungsleitung

- 4: gekröpftes Anschlussrohr

- 31: Mischeinheit

## Patentansprüche

1. Mehrflammenbrenner (10) mit einer Anzahl von nebeneinander angeordneten Brennerköpfen (1) und dazugehörigen Anschlussrohren (4), die dafür eingerichtet sind, bei Speisung mit einem Brennstoff wenigstens eine jeweils entlang einer Flammenachse (14) ausgerichtete Brennerflamme (13) zu erzeugen, wobei die Anschlussrohre (4) gekröpft ausgebildet sind, und die Brennerköpfe (1)) in wenigstens zwei Gruppen (A, B) von Brennerköpfen (1) entlang einer Speiseleitung vorgesehen sind, wobei die Brennerköpfe (1) wenigstens einer ersten Gruppe (A) jeweils alternierend zu den Brennerköpfen wenigstens einer weiteren Gruppe (B) angeordnet sind und die Flammenachsen (14) der Brennerköpfe (1) zumindest der ersten Gruppe (A) schräg zu den Flammenachsen (14) der Brennerköpfe (1) zumindest der wenigstens einen weiteren Gruppe (B) ausgerichtet sind, so dass die jeweils nebeneinander angeordneten Brennerköpfe jeweils divergierende Flammenachsen aufweisen und damit divergierende Brennerflammen erzeugen, so dass die durch die Flammen gebildeten heißen Abgase die Brennerköpfe nicht wechselseitig schädigen können.

2. Mehrflammenbrenner (10) nach Anspruch 1, **dadurch gekennzeichnet, dass** die gekröpften Anschlussrohre einen Kröpfungswinkel im Bereich von 30° bis 60°, bevorzugt von ca. 45°, aufweisen.

3. Mehrflammenbrenner (10) nach einem der Ansprüche 1 oder 2, **dadurch gekennzeichnet, dass** die Anschlussrohre (4) mittels einer Verschraubung (15) drehbar mit jeweils einem Anschlussstutzen (16) verbunden sind, wobei die Anschlussstutzen (16) an ihrem jeweils anderen Ende an einer gemeinsamen Speiseleitung (2) befestigt und durch die gemeinsame Speiseleitung (2) mit dem Brennstoff speisbar sind.

4. Mehrflammenbrenner (10) nach Anspruch 1 bis 3, bei dem die Brennerköpfe (1) innerhalb jeder Gruppe (A, B) jeweils gleichsinnig oder parallel zueinander angeordnet sind.

5. Mehrflammenbrenner (10) nach einem der Ansprüche 1 bis 4, bei dem die Brennerköpfe (1) jeweils Flammenachsen (14) aufweisen, die gegenüber einer Senkrechten auf eine Mittellinie der Speiseleitung (2) in axialer und/oder in radialer Richtung geneigt sind, bevorzugt jeweils nebeneinander angeordneten Brennerköpfe (1) mit einem Winkel von 5° bis 45° zueinander geneigt sind.

6. Mehrflammenbrenner (10) nach einem der vorstehenden Ansprüche, mit einer Gasversorgungseinrichtung (3), die dafür eingerichtet ist, den Mehrflammenbrenner (10) mit wenigstens einem gasförmigen Brennstoff zu speisen, wobei die Gasversorgungseinrichtung (3) bevorzugt dafür eingerichtet ist, den Mehrflammenbrenner (10) mit einem Acetylen enthaltenden Brennstoffgemisch, besonders bevorzugt einem Acetylen-(Druck)luft-Gemisch oder einem Acetylen-Sauerstoff-Gemisch, als dem wenigstens einen gasförmigen Brennstoff zu speisen.

7. Mehrflammenbrenner (10) nach einem der vorstehenden Ansprüche, der eine Speiseleitung (2) aufweist, die als gebogener Schaft (2) ausgeführt ist, wobei der gebogene Schaft (2) bevorzugt im Wesentlichen aus Edelstahl gefertigt ist.

8. Verfahren zum Vorwärmen eines Werkstücks, insbesondere eines Rohrs oder Großrohrs, bei dem ein Mehrflammenbrenner (10) nach einem der vorstehenden Ansprüche verwendet wird und mittels des Mehrflammenbrenners (10) erzeugte Brennerflammen (13) auf das Werkstück gerichtet werden.

## Claims

1. Multi-flame burner (10) with a number of burner heads (1) arranged next to one another and associated connecting pipes (4), which are configured to generate at least one burner flame (13) aligned along a flame axis (14) when fed with a fuel, wherein the connecting pipes (4) are of offset design, and the burner heads (1) are provided in at least two groups (A, B) of burner heads (1) along a feed line, wherein the burner heads (1) of at least one first group (A) are each arranged alternately at the burner heads of at least one additional group (B), and the flame axes (14) of the burner heads (1) of at least the first group (A) are aligned obliquely to the flame axes (14) of the burner heads (1) of at least the at least one additional group (B) so that the burner heads arranged next to one another each have diverging flame axes and thus generate diverging burner flames so that the hot exhaust gases formed by the flames cannot reciprocally damage the burner heads.

2. Multi-flame burner (10) according to claim 1, **characterized in that** the offset connecting pipes have an offset angle in the range of 30° to 60° - preferably, of approximately 45°.

3. Multi-flame burner (10) according to one of claims 1 or 2, **characterized in that** the connecting pipes (4) are each rotatably connected by means of a screw connection (15) to a connecting piece (16), wherein the connecting pieces (16) are fastened at their respective other end to a common feed line (2) and are able to be fed with the fuel through the common feed line (2).

4. Multi-flame burner (10) according to claims 1 through 3, in which the burner heads (1) within each group (A, B) are each arranged in the same direction or in parallel to one another.

5. Multi-flame burner (10) according to one of claims 1 through 4, in which the burner heads (1) each have flame axes (14), which are inclined in the axial and/or in the radial direction relative to a perpendicular to a center line of the feed line (2); preferably, burner heads (1) arranged next to one another are inclined at an angle of 5° to 45° to each other.

6. Multi-flame burner (10) according to one of the preceding claims, with a gas supply device (3) configured to feed the multi-flame burner (10) with at least one gaseous fuel, wherein the gas supply device (3) is preferably configured to feed the multi-flame burner (10) with an acetylene-containing fuel mixture - particularly preferably, an acetylene-(compressed) air mixture or an acetylene-oxygen mixture - as the at least one gaseous fuel.

7. Multi-flame burner (10) according to one of the preceding claims, which has a feed line (2) designed as an arcuate shaft (2), wherein the arcuate shaft (2) is, preferably, substantially made of stainless steel.

8. Method for preheating a workpiece - in particular, a pipe or large pipe - in which a multi-flame burner (10) according to one of the preceding claims is used, and burner flames (13) generated by means of the multi-flame burner (10) are directed onto the workpiece.

## Revendications

1. Brûleur multiflamme (10) comprenant un nombre de têtes de brûleur (1) disposées les unes à côté des autres et des tubes de raccordement (4) correspondants, qui sont conçus pour générer, lors de l'alimentation d'un combustible, au moins une flamme de brûleur (13) orientée respectivement le long d'un axe de flamme (14), les tubes de raccordement (4) étant formés coudés et les têtes de brûleur (1) étant prévues dans au moins deux groupes (A, B) de têtes de brûleur (1) le long d'une conduite d'alimentation, les têtes de brûleur (1) d'au moins un premier groupe (A) étant disposées respectivement en alternance avec les têtes de brûleur d'au moins un autre groupe (B) et les axes de flamme (14) des têtes de brûleur (1) d'au moins le premier groupe (A) étant orientés obliquement par rapport aux axes de flamme (14) des têtes de brûleur (1) au moins de l'au moins un autre groupe (B), de telle sorte que les têtes de brûleur disposées respectivement les unes à côté des autres présentent des axes de flamme respectivement divergents et génèrent ainsi des flammes de brûleur respectivement divergentes, de telle sorte que les gaz d'échappement chauds formés par les flammes ne puissent pas endommager mutuellement les têtes de brûleur.

2. Brûleur multiflamme (10) selon la revendication 1, **caractérisé en ce que** les tubes de raccordement coudés présentent un angle de coude compris dans la plage de 30° à 60°, de préférence d'environ 45°.

3. Brûleur multiflamme (10) selon l'une quelconque des revendications 1 ou 2, **caractérisé en ce que** les tubes de raccordement (4) sont connectés de manière rotative à un manchon de raccordement (16) respectif au moyen d'un vissage (15), les manchons de raccordement (16) étant fixés à leur autre extrémité respective à une conduite d'alimentation (2) commune et pouvant être alimentés en combustible à travers la conduite d'alimentation (2) commune.

4. Brûleur multiflamme (10) selon la revendication 1 à 3, dans lequel les têtes de brûleur (1) situées à l'intérieur de chaque groupe (A, B) sont disposées dans le même sens ou parallèlement les unes aux autres.

5. Brûleur multiflamme (10) selon l'une quelconque des revendications 1 à 4, dans lequel les têtes de brûleur (1) présentent respectivement des axes de flamme (14) qui sont inclinés dans une direction axiale et/ou radiale par rapport à une ligne verticale sur la ligne centrale de la conduite d'alimentation (2), de préférence les têtes de brûleur (1) disposées respectivement les unes à côté des autres sont inclinées selon un angle de 5° à 45° les unes par rapport aux autres.

6. Brûleur multiflamme (10) selon l'une quelconque des revendications précédentes, comprenant un dispositif d'alimentation en gaz (3) conçu pour alimenter le brûleur multiflamme (10) avec au moins un combustible gazeux, le dispositif d'alimentation en gaz (3) étant conçu de préférence pour alimenter le brûleur multiflamme (10) avec un mélange de combustible contenant de l'acétylène, en particulier de préférence un mélange d'acétylène et d'air (comprimé) ou un mélange d'acétylène et d'oxygène, comme l'au moins un combustible gazeux.

7. Brûleur multiflamme (10) selon l'une quelconque des revendications précédentes, lequel présente une conduite d'alimentation (2), conçue comme un manche courbe (2), le manche courbe (2) étant de préférence fabriqué essentiellement en acier inoxydable.

8. Procédé pour le préchauffage d'une pièce usinée, en particulier d'un tube ou d'un gros tube, dans lequel un brûleur multiflamme (10) selon l'une quelconque des revendications précédentes est utilisé et des flammes de brûleur (13) générées au moyen du brûleur multiflamme (10) sont dirigées sur la pièce usinée.
